(19) Europäisches Patentamt
European Patent Office
Office européen des brevets

(11) Veröffentlichungsnummer: **0 003 129**
**B2**

# (12) NEUE EUROPÄISCHE PATENTSCHRIFT

(45) Veröffentlichungstag der neuen Patentschrift: **18.07.84**

(51) Int. Cl.³: **C 08 F 210/16**, C 08 F 4/64, C 08 J 5/22

(21) Anmeldenummer: **79100062.3**

(22) Anmeldetag: **10.01.79**

(54) **Äthylencopolymere, Verfahren zu ihrer Herstellung, ihre Verwendung zur Herstellung von Folien und die so hergestellten Folien.**

(30) Priorität: **14.01.78 DE 2801541**

(43) Veröffentlichungstag der Anmeldung: **25.07.79 Patentblatt 79/15**

(45) Bekanntmachung des Hinweises auf die Patenterteilung: **12.08.81 Patentblatt 81/32**

(45) Bekanntmachung des Hinweises auf die Entscheidung über den Einspruch: **18.07.84 Patentblatt 84/29**

(84) Benannte Vertragsstaaten: **BE DE FR GB IT NL**

(56) Entgegenhaltungen:
**DE - A - 1 520 542**
**DE - A - 1 595 597**
**DE - A - 1 669 852**
**DE - A - 1 720 611**
**DE - A - 2 609 527**
**DE - A - 2 714 743**
**GB - A - 1 355 245**
**Kunststoffe, 67 (1977), S. 377-380**
**Plastics Engineering, Aug. 1977, S. 41-43**
**SPE-Journal, June 1970, 40-43 und Nov. 1967, S. 37-90**
**SPE Transactions, Oct 1962, S. 285-293**
**Technical Papers, Vol. VII 1961, 17th ANTEC, Society of Plastics Engineers**
**Technisches Merkblatt Lupolen 4261 A (1973) BASF (DE)**
**News-0906 HMW/HDPE (1983) Unifos Kemi AB (SE)**

(73) Patentinhaber: **HOECHST AKTIENGESELLSCHAFT, Postfach 80 03 20, D-6230 Frankfurt am Main 80 (DE)**

(72) Erfinder: **Diedrich, Bernd, Dr., Ulmenweg 10, D-6236 Eschborn (DE)**
Erfinder: **Böhm, Ludwig, Dr., Am Gonsenheimer Spiess 6, D-6500 Mainz (DE)**
Erfinder: **Heine, Olaf, Dr., Am Eichkopf 2, D-6240 Königstein/Taunus (DE)**

**EP 0 003 129 B2**

BUNDESDRUCKEREI BERLIN

**Beschreibung**

Die Erfindung betrifft Äthylencopolymere, die nach bekannten Verfahren zu zähen Folien mit weitgehend ausgeglichenen, mechanischen Werten in Längs- und Querrichtung verarbeitet werden können.

Aus Polyäthylen niedriger Dichte (LDPE), mittlerer Dichte (MDPE) und hoher Dichte (HDPE) kann man nach bekannten Verfahren Folien herstellen. Derartige Produkte sind im Handel erhältlich. Es ist weiter bekannt, daß man aus LDPE Folien mit ausgeglichenen, mechanischen Werten in Längs- und Querrichtung herstellen kann, während man aus HDPE, insbesondere bei kleinem Aufblasverhältnis und bei Foliendicken über 0,025 mm, Folien erhält, deren mechanische Werte in Längs- und Querrichtung stark verschieden sind.

Bekannt ist ein Copolymer von Äthylen mit einem Comonomeren, welches letzteres durch mindestens ein Mono-$\alpha$-Olefin gebildet wird, wobei zumindest 50 Mol-% dieses Mono-$\alpha$-Olefins fünf oder mehr Kohlenstoffatome aufweisen. Das Copolymer weist eine Dichte von 0,918 bis 0,940 $g/cm^3$, eine bei 200°C und einer Schergeschwindigkeit von 100 $s^{-1}$ gemessene effektive Viskosität von $0{,}5 \cdot 10^3$ bis $3{,}0 \cdot 10^3$ $Nsm^{-2}$ und eine bei einer Schubspannung von $10^3$ $N/m^1$ gemessene Viskosität auf, welche zumindest gleich $2 A \cdot e^{(1{,}6 A \cdot 10^{-3})}$ und nicht höher als 1000 A ist, wobei A die effektive Viskosität bei 200°C und einer Schergeschwindigkeit von 100 $s^{-1}$ ist. Die aus diesen Copolymeren hergestellten Folien besitzen eine hohe Schlagfestigkeit, gute Reißfestigkeit und Steifheit, jedoch ist dafür ein verhältnismäßig hoher Comonomerengehalt von 6,5 bis 30 Gew.-% notwendig (vgl. DE-OS 2 609 527).

Es wurde nun gefunden, daß man Polyäthylene mit hoher Dichte (HDPE) herstellen kann, die bei kleinem Aufblasverhältnis zu dicken (>0,025 mm) Folien mit weitgehend ausgeglichenen mechanischen Werten in Längs- und Querrichtung verarbeitet werden können.

Unmittelbarer Gegenstand der Erfindung ist somit die in den Ansprüchen genannte Verwendung dieser Polyäthylene sowie ein Verfahren zu ihrer Herstellung.

Diese Äthylencopolymere lassen sich auf Folienmaschinen zu zähen Folien verarbeiten, die keine Oberflächenrauhigkeiten oder Strukturen aufweisen. Dieses gute Verarbeitungsverhalten zeigen diese Polymere ohne Zusatz von Additiven, die über das übliche Maß hinausgehen. Weiterhin kann bei der Blasfolienherstellung das Aufblasverhältnis variiert werden, wobei Folien mit wesentlich ausgeglicheneren mechanischen Werten in Längs- und Querrichtung als mit im Handel erhältlichen HDPE-Folienmaterialien erzeugt werden können. Außerdem zeichnen sich die aus den erfindungsgemäßen Copolymeren hergestellten Folien durch eine geringere Gasdurchlässigkeit aus.

Die erfindungsgemäßen Copolymeren sind Copolymere von Äthylen mit 1-Olefinen der Formel $R-CH=CH_2$, worin R einen Alkylrest mit 1 bis 6 C-Atomen bedeutet, vorzugsweise mit Buten-1, die nach dem Niederdruckverfahren (Ziegler-Verfahren) hergestellt werden.

Die Copolymeren enthalten 0,5 bis 5,5, vorzugsweise 2 bis 5 Gew.-% des Comonomeren. Der Comonomergehalt wird aus dem Verbrauch des Comonomeren während der Polymerisation, bezogen auf die Gesamtmenge des gebildeten Polymeren, berechnet.

Die Copolymeren haben Dichten nach DIN 53 479 im Bereich von 0,935 bis 0,945 $g/cm^3$. Sie liegen damit im Dichtebereich an der unteren Grenze von HDPE und reichen bis in den Bereich von MDPE. Die Copolymeren haben Schmelzindices MFI 190/5 nach DIN 53 735 im Bereich von 0,2 g/10 min bis 0,05 g/10 min. Der Quotient der Schmelzindices MFI190/15/MFI190/5 ist größer als 8. Dieser Wert zeigt an, daß es sich um Copolymere mit breiter Molekulargewichtsverteilung handelt. Die Molekulargewichtsverteilung kann nach verschiedenen Methoden bestimmt werden, im vorliegenden Fall wird sie gelchromatographisch gemessen. Aus den erhaltenen Daten kann man als Maß für die Breite der Molekulargewichtsverteilung den Quotienten $M_w/M_n$ ($M_w$: Gewichtsmittel des Molekulargewichts; $M_n$: Zahlenmittel des Molekulargewichts) berechnen. Der $M_w/M_n$-Wert liegt bei diesen Polymeren im Bereich von 10 bis 20. Derartige Polymere muß man als Polymere mit sehr breiter Molekulargewichtsverteilung bezeichnen. Die Scherviskosität dieser Polymeren liegt bei 200°C bei einer Schubspannung von $10^5$ $N/m^2$ im Bereich von $6 \cdot 10^3$ bis $1 \cdot 10^5$ Pa.s, bei der Schubspannung von $10^2$ $N/m^2$ dagegen im Bereich von $4 \cdot 10^5$ bis $4 \cdot 10^6$ Pa.s. Diese Werte wurden nach bekannten Methoden (s. J. R. van Wazer, J. W. Lyons, K. Y. Kim, R. E. Colwell, Viscosity and Flow Measurements, Interscience Publisher, New York, 1963) gemessen.

Die erfindungsgemäßen Copolymeren werden nach dem Niederdruck-Polymerisationsverfahren (Ziegler-Verfahren) hergestellt. Dabei arbeitet man in Suspension in einem inerten Dispergiermittel oder in der Gasphase.

Als inertes Dispergiermittel eignet sich ein aliphatischer oder cycloaliphatischer Kohlenwasserstoff. Pentan, Hexan, Heptan, Cyclohexan, Methylcyclohexan, Benzin oder Dieselölfraktionen, welche sorgfältig von Sauerstoff, Schwefelverbindungen und Feuchtigkeit befreit worden sind, sind brauchbar. Aromatische Kohlenwasserstoffe, wie Benzol, Toluol, Xylol eignen sich weniger. Vorzugsweise werden gesättigte Kohlenwasserstoffe verwendet.

Man arbeitet kontinuierlich oder diskontinuierlich zweistufig. Bei der Suspensionspolymerisation liegt die Reaktionstemperatur im Bereich von 20 bis 100°C, vorzugsweise von 70 bis 90°C. Bei dieser Temperatur fällt das Polymere als teilkristalline Phase an, mit Ausnahme eines geringen Anteils (ca. 1 bis 2 Gew.-%) von sehr niedermolekularen Copolymeren, die im Dispergiermittel gelöst sind. Der

Polymerisationsdruck beträgt 0,5 bis 50 bar, vorzugsweise 1 bis 40 bar.

Der für die Herstellung der erfindungsgemäßen Copolymeren verwendete Mischkatalysator besteht aus einer titanhaltigen Verbindung (Komponente A) und einer aluminiumorganischen Verbindung (Komponente B).

Als titanhaltige Verbindung eignet sich beispielsweise das nach nachfolgend beschriebenem Verfahren hergestellte Produkt.

In einem mit Rührer und Stickstoffüberlagerung versehenen 300-l-Kessel werden 5,5 l, entsprechend 50 Molen, reinstes destilliertes Titantetrachlorid mit 60 l entgastem von Sauerstoff und Schwefelverbindungen sowie von Olefinen befreitem Kohlenwasserstoff (Erdölfraktion Sdp. 200 bis 250° C) vorgelegt und auf 0 bis −10° C abgekühlt. Im Verlauf von 3 Stunden werden 110 Mol Äthylaluminiumsesquichlorid, in der obengenannten Erdölfraktion gelöst (200 bis 300 g/l), eingetropft. Die Temperatur wird durch Kühlrohre auf −2 bis +1° C gehalten. Nach dem Eintropfen wird weitere 6 Stunden bei −2 bis 0° C gerührt und danach das gebildete Präzipitat über ein Kerzenfilteraggregat von der Reaktionsmutterlauge abgetrennt und bei Raumtemperatur dreimal mit je 50 l Erdölfraktion gewaschen. Man suspendiert in 150 l Erdölfraktion, wäscht das Kerzenfilter mit je zweimal 20 l Erdölfraktion nach und erhält so 160 kg einer etwa 0,23molaren Titan(III)-chlorid-Suspension, was einer Ausbeute von etwa 93%, bezogen auf eingesetztes Titantetrachlorid, entspricht. Alle Operationen werden unter peinlichem Ausschluß des Luftsauerstoffs durchgeführt.

Die erhaltene Dispersion von $TiCl_3$ wird nun unter reinstem Stickstoff 3 Stunden lang bei 100° C gerührt, abgesaugt und zweimal mit demselben Volumen Erdölfraktion bei Raumtemperatur gewaschen und mit dem gleichen Volumen Dispergiermittel aufgeschlämmt und für die Polymerisation verwendet.

Auch das nachstehend hergestellte Produkt ist als titanhaltige Verbindung geeignet.

In einem 20-l-V-4-A-Reaktor mit Rührer und $N_3$-Überlagerung werden eingefüllt 9 l hydriertes Dieselöl (Kp 130 bis 170° C), sowie 857 g Magnesiumäthylat. Danach wird unter Rühren in $^1/_2$ Stunde auf 100° C aufgeheizt und bei dieser Temperatur in 4 Stunden 2,84 kg (=1,65 l) Titantetrachlorid zugegeben. Anschließend wird 8 Stunden bei 100° C nachgerührt. Sodann wird der Niederschlag durch mehrmaliges Waschen mit Dieselöl und Dekantieren von den löslichen Reaktionsprodukten befreit. Er kann in Form einer Suspension für die Polymerisation verwendet werden.

Als Komponente B eignen sich chlorhaltige aluminiumorganische Verbindungen, wie Dialkylaluminiummonochloride der Formel $R^2_2AlCl$ oder Alkylaluminiumsesquichlorid der Formel $R^2_3Al_2Cl_3$, worin $R^2$ einen Kohlenwasserstoffrest mit 1 bis 16 Kohlenstoffatomen, vorzugsweise Alkylrest mit 1 bis 16, insbesondere 2 bis 4 Kohlenwasserstoffatomen bedeutet. Als Beispiel seien genannt:

$(C_2H_5)_2AlCl$, $(i\text{-}C_4H_9)_2AlCl$, $(C_2H_5)_3Al_2Cl_3$.

Geeignete aluminiumorganische Verbindungen sind auch die Umsetzungsprodukte von Aluminiumtrialkylen oder Aluminiumdialkylhydriden, die Alkylreste mit 1 bis 14 Kohlenstoffatomen enthalten, mit 4 bis 20 Kohlenstoffatomen enthaltenden Dienen.

Besonders vorteilhaft werden als Komponente B Aluminiumtrialkyl der Formel $AlR^2_3$ oder Aluminiumdialkylhydride der Formel $AlR^2_2H$ eingesetzt, in denen $R^2$ einen Kohlenwasserstoffrest mit 1 bis 16 Kohlenwasserstoffatomen, vorzugsweise einen Alkylrest mit 1 bis 16, insbesondere 2 bis 4 Kohlenstoffatomen bedeutet, wie $Al(C_2H_5)_3$, $Al(C_2H_5)_2H$, $Al(C_3H_7)_2H$, $Al(i\text{-}C_4H_9)_3$, $Al(i\text{-}C_4H_9)H$.

Verwendet wird ein diskontinuierliches, zweistufiges Verfahren, wobei in der 1. Polymerisationsstufe in Gegenwart von 0 bis 20% Wasserstoff in der Gasphase ein hochmolekulares Copolymeres gebildet wird (RSV=5 bis 15, vorzugsweise 6–10 dl/g, gemessen in Decahydronaphthalin bei 135° C mit c=0,1 g/100 cm³). Der Anteil dieses hochmolekularen Polymeren beträgt 45 bis 70, vorzugsweise 55 bis 65 Gew.-%, bezogen auf die Gesamtmenge des Polymeren. In dieser Polymerisationsstufe wird ein Äthylen/Comonomergemisch eingeleitet, so daß ein Polymeres mit 0,5 bis 5,5, vorzugsweise 2 bis 5 Gew.-% an Comonomeren entsteht. Der RSV-Wert kann mit Wasserstoff eingestellt werden. Wenn 45 bis 70 Gew.-% des Polymeren hergestellt sind, wird die Polymerisation auf die 2. Polymerisationsstufe umgestellt, indem man so viel Wasserstoff auf den Polymerisationskessel aufdrückt, daß sich im Gasraum ein Wasserstoffgehalt von 45 bis 80, vorzugsweise 55 bis 65 Vol.-% einstellt. Auch in der 2. Polymerisationsstufe wird ein Äthylen/Comonomergemisch eingeleitet, wobei dieses Gemisch mit der 1. Polymerisationsstufe identisch sein kann oder auch mehr oder weniger Comonomeres enthalten kann. In dieser Stufe werden 30 bis 55 Gew.-% eines niedermolekularen Copolymeren mit einem RSV-Wert von 0,5 bis 3, vorzugsweise 1,0 bis 2,0 dl/g gebildet. Die Polymerisation wird in beiden Stufen bei einer Temperatur von 25 bis 90° C durchgeführt. Die bevorzugte Polymerisationstemperatur ist 70–90° C. Die Polymerisation erfolgt bei einem Druck von 0,5 bis 50 bar, bevorzugt von 1 bis 10 bar.

Nach einer Polymerisationszeit von 4 bis 8 Stunden, vorzugsweise 5,5 bis 6,5 Stunden, wird das Copolymer vom Dispergiermittel abfiltriert und getrocknet.

Zur Herstellung von Folien aus den erfindungsgemäßen Copolymeren kann eine übliche Blasfolienanlage verwendet werden. Eine derartige Anlage besteht aus einer Schneckenpresse, welche das eingegebene Polymer-Pulver oder -Granulat aufschmilzt, entlüftet und homogenisiert und durch eine Ringdüse auspreßt. Der aus der Düse austretende Schlauch wird in einer bestimmten Entfernung von

der Düse abgequetscht. Zwischen Düse und Abquetschvorrichtung wird der Schlauch durch Luft oder ein anderes Gas aufgeblasen und so die gewünschte Folienstärke erhalten. Nach der Abquetschvorrichtung wird der Schlauch aufgewickelt und gegebenenfalls aufgetrennt.

Die mechanischen Werte der aus den erfindungsgemäßen Copolymeren hergestellten Folien sind besser als die der aus HDPE-, MDPE- und LDPE-Folienrohstoffen, die im Handel erhältlich sind, hergestellt.

Die entsprechenden, vergleichbaren Daten sind in Tabelle 3 zusammengestellt. Diese Daten zeigen, daß die erfindungsgemäßen Folien nahezu isotrop sind, weil die mechanischen Werte in Längs- und Querrichtung weitgehend ausgeglichen sind. Die Reißfestigkeiten und Reißdehnungen nach DIN 53 455 sind größer als 25 $N/mm^2$ bzw. 600%. Die Einreißfestigkeiten und Weiterreißfestigkeiten nach DIN 53 515 sind größer als 150 N/mm bzw. 100 N/mm. Die Schlagzähigkeiten nach DIN 53 448 sind größer als 2500 $mJ/mm^2$ in beiden Richtungen.

Eine weitere Eigenschaft, in der sich die aus diesen Äthylencopolymeren hergestellten Folien im Vergleich zu Folien aus MDPE und LDPE unterscheiden, ist die geringe Gasdurchlässigkeit. Die entsprechenden Werte sind in Tabelle 4 angegeben. Die Werte wurden nach DIN 53 122 und DIN 53 380 gemessen.

## Beispiel 1

Der Katalysator wird in einem 2-l-Vierhalskolben, der einen Blattrührer, Tropftrichter, Rückflußkühler, Thermometer und eine Vorrichtung zur Überlagerung mit trockenem Stickstoff oder Argon enthält, hergestellt.

Dazu werden 1,2 l eines Kohlenwasserstoffgemisches (Sdp. 130—170° C) vorgelegt. Dieses Kohlenwasserstoffgemisch sollte keine Aromaten und ungesättigten Kohlenwasserstoffe enthalten. Es muß trocken und mit Stickstoff oder Argon gespült sein. In diesem Dispergiermittel wird 1 Mol $Mg(OC_2H_5)_2$ suspendiert und auf 100° C aufgeheizt. Bei 100° C werden innerhalb von 4 h kontinuierlich 225 $cm^3$ (2 Mol) $TiCl_4$ zugegeben. Man rührt dann noch 0,5 h bei 100° C.

Danach wird das Dispergiermittel bei einer Temperatur von 70° C abdekantiert und der Feststoff mehrmals mit frischem Dispergiermittel bei 70° C gewaschen, bis die Titankonzentration im Dispergiermittel kleiner 10 mMol/l ist (dieser Ti-Gehalt wird kalorimetrisch mit Wasserstoffperoxid bestimmt, s. G. O. Müller, Praktikum der quantitativen chemischen Analyse, 4. Auflage [1957], S. 243).

In einem 170-l-Reaktor, der mit Rührer, Heizmantel und verschiedenen Eingängen für Dispergiermittel, Katalysator, Cokatalysator, Äthylen, Comonomeren und Wasserstoff versehen ist, legt man 100 l Dispergiermittel vor. Man heizt den Reaktorinhalt auf 85° C hoch. Dann gibt man unter Überlagerung mit Schutzgas (Stickstoff) 400 mMol $Al(C_2H_5)_3$ und anschließend den obengenannten Katalysator hinzu. Die eingesetzte Katalysatormenge wird auf die Menge der Titanverbindung bezogen und beträgt 30 mMol Titanverbindung.

In das Dispergiermittel werden nun 6 Stunden lang 6,7 kg Äthylen/h und 0,24 kg Buten-1/h eingeleitet. Während der Reaktionszeit von 3 h 20 min ist im System kein Wasserstoff als Molekulargewichtsregler vorhanden. Dann wird so viel Wasserstoff aufgedrückt und weiter zugegeben, daß während der verbleibenden Reaktionszeit von 2 h 40 min im Gasraum eine Wasserstoffkonzentration von 60—65 Vol.-% vorliegt. Im Reaktor steigt der Druck bis zum Ende der Polymerisation auf 7—8 bar.

Nach 6 h wird das Polymere heiß abfiltriert und getrocknet. Die Polymerkenndaten sind in Tabelle 1 beim Produkt 1 angegeben.

## Beispiel 2

Dieser Versuch wird entsprechend Beispiel 1 durchgeführt mit dem Unterschied, daß 0,18 kg Buten-1/h eingeleitet werden. Die Polymerkenndaten sind in Tabelle 1 beim Produkt 2 angegeben.

## Beispiel 3

Der Polymerisationskessel wird wie beim Beispiel 1 vorbereitet.

In das Dispergiermittel werden 6 Stunden lang 6,7 kg Äthylen/h und 0,36 kg Hexen-1/h eingeleitet. Während einer Reaktionszeit von 3 h 50 min ist im System kein Wasserstoff vorhanden. Dann wird so viel Wasserstoff aufgedrückt und weiter zugegeben, daß während der verbleibenden Reaktionszeit von 2 h 10 min im Gasraum eine Wasserstoffkonzentration von 65 Vol.-% vorliegt. Nach 6 h wird das Polymere heiß abfiltriert und getrocknet. Die Polymerkenndaten sind in Tabelle 1 beim Produkt 3 angegeben.

Beispiel 4

Die Polymeren, die gemäß den Beispielen 1 bis 3 hergestellt wurden, und drei im Handel erhältliche Polymere A (HDPE), B (MDPE), C (LDPE) werden auf einer Blasfolienanlage zu Folien verarbeitet.

Die Anlage besteht aus einem Extruder mit einer Schneckenlänge 20 × D und einem Schneckendurchmesser D von 30 mm. Die Ringdüse hat einen Durchmesser von 51 mm und eine Spaltweite von 0,8 mm. Der extrudierte Schlauch wird mit Luft aufgeblasen und gekühlt. Die Blasfolie wird nach unten vom Extruder abgezogen. Bei der Folienherstellung wird das Aufblasverhältnis (Durchmesser der Düse/Durchmesser des Folienschlauches) und die Abzugsgeschwindigkeit des Folienschlauches variiert (s. Tabelle 2). Dadurch können die Folendicken verändert werden. Der Extruderausstoß beträgt bei 80 Upm 6 kg/h. Die Temperatur im Extruder und in der Düse beträgt jeweils 175—240° C, 240° C.

Die aus den erfindungsgemäßen Copolymeren erhaltene Folien und die Folien, die aus den Vergleichsprodukten A bis C hergestellt wurden, werden auf ihre Eigenschaften geprüft. Die entsprechenden Daten sind in der Tabelle 3 zusammengestellt.

Die Gasdurchlässigkeiten einer Folie, die aus dem Copolymeren gemäß Beispiel 2 hergestellt wurde, sind zusammen mit der einer Folie (Vergleichsprobe B) in Tabelle 4 angegeben.

Tabelle 1

| | Comonomeres | Comonomer-gehalt Gew.-% | Dichte g/cm³ | MFI 190/5 g/10 min | MFI 190/15 / MFI 190/ 5 |
|---|---|---|---|---|---|
| Produkt | | | | | |
| 1 | Buten-1 | 2,5—3,0 | 0,940 | 0,16 | 8,8 |
| 2 | Buten-1 | 2,0—2,5 | 0,942 | 0,16 | 8,5 |
| 3 | Hexen-1 | 4—5 | 0,941 | 0,08 | 9 |
| Vergleichsprodukt | | | | | |
| A (HDPE) | — | — | 0,953 | 0,3 | 11 |
| B (LDPE) | — | — | 0,916 | 1,1 | 8,5 |
| C (MDPE) | — | — | 0,918 | 2,9 | 8 |

A, B und C Handelsprodukte ohne Füllstoff.

Tabelle 2

Verarbeitung nach den Blasfolienverfahren

| | Aufblasverhältnis*) 1 : 2 a | 1 : 2 b | 1 : 3,5 c | 1 : 3,5 d |
|---|---|---|---|---|
| Produkt A | | | | |
| Foliendicke mm | 0,170 | 0,110 | 0,095 | 0,060 |
| Schlagzugzähigkeit längs/mJ/mm² | 1300 | 1950 | 1350 | 3000¹) |
| Schlagzugzähigkeit quer/mJ/mm² | 100 | 90 | 140 | 130¹) |
| Beispiel 2 | | | | |
| Foliendicke mm | 0,190 | 0,105 | 0,090 | 0,060 |
| Schlagzugzähigkeit längs/mJ/mm² | 3750 | 3850 | 3600 | 4600 |

Tabelle 2 (Fortsetzung)

Verarbeitung nach den Blasfolienverfahren

| | Aufblasverhältnis*) 1 : 2 a | 1 : 2 b | 1 : 3,5 c | 1 : 3,5 d |
|---|---|---|---|---|
| Schlagzugzähigkeit quer/mJ/mm² | 3200 | 3300 | 3100 | 3800 |
| Produkt C | | | | |
| Foliendicke mm | 0,180 | 0,110 | 0,100 | 0,060 |
| Schlagzugzähigkeit längs/mJ/mm² | 2250 | 2650 | 2200 | 2820 |
| Schlagzugzähigkeit quer/mJ/mm² | 1900 | 1900 | 2200 | 2760 |

a: Halslänge 3,8 × Düsendurchmesser, Abzugsgeschwindigkeit 2 m/min.
b: Halslänge 3,8 × Düsendurchmesser, Abzugsgeschwindigkeit 4 m/min.
c: Halslänge 3,8 × Düsendurchmesser, Abzugsgeschwindigkeit 2 m/min.
d: Halslänge 3,8 × Düsendurchmesser, Abzugsgeschwindigkeit 4 m/min.
*) Düsendurchmesser/Durchmesser des Folienschlauches.
[1]) Das Produkt A wird üblicherweise zu dünnen Folien (Foliendicke 0,01—0,025 mm) und bei höheren Aufblasverhältnissen verarbeitet. Dann erhält man auch aus diesem Rohstoff ausgeglichenere Folien, deren Schlagzugzähigkeiten längs und quer zur Extrusionsrichtung im Bereich von 2000—4000 mJ/mm² liegen.

Tabelle 3

| | DIN 53 455 Reißfestigkeit N/mm² l | q | DIN 53 455 Reißdehnung % l | q | DIN 53 515 Einreißfestigkeit N/mm l | q | DIN 53 515 Weiterreißfestigkeit N/mm l | q | DIN 53 448 Schlagzugzähigkeit mJ/mm² l | q |
|---|---|---|---|---|---|---|---|---|---|---|
| Probe*) | | | | | | | | | | |
| 1 | 40 | 44 | 850 | 940 | 173 | 174 | 123 | 103 | 4000 | 3000 |
| 2 | 34 | 26 | 720 | 680 | 163 | 160 | 131 | 102 | 3750 | 3200 |
| 3 | 41 | 44 | 770 | 750 | 196 | 204 | 132 | 101 | 3400 | 2900 |
| Vergleichsprobe | | | | | | | | | | |
| A | 39 | 45 | 900 | 920 | 195 | 208 | 138 | 125 | 1300 | 100 |
| B | 21 | 18 | 500 | 720 | 105 | 123 | 83 | 63 | 2000 | 2000 |
| C | 26 | — | 960 | — | — | — | 273 | — | 2250 | 1900 |

*) Die Foliendicken betragen: 0,170—0,180 mm.
l: längs zur Estrusionsrichtung.
q: quer zur Extrusionsrichtung.

Tabelle 4

Gasdurchlässigkeiten bei 0,100 mm-Folien in $cm^3$ Gas/$m^2$ · 24 h bei 20° C

| | LDPE-Folie aus B | Folie aus Copolymer gemäß Beispiel 2 |
|---|---|---|
| $CO_2$ | 6800 | 3300 |
| $N_2$ | 530 | 240 |
| $O_2$ | 1700 | 870 |
| $H_2O$*) | 0,8–2,5 | 0,41 |

*) in g $H_2O/m^2$ 24 h.

**Patentansprüche**

1. Äthylencopolymere, dadurch gekennzeichnet, daß sie 94,5—99,5 Gew.-% Äthylen und 0,5 bis 5,5 Gew.-% eines 1-Olefins der Formel $R-CH=CH_2$, worin R einen Alkylrest mit 1 bis 6 Kohlenstoffatomen bedeutet, enthalten und eine Dichte von 0,935 bis 0,945 g/$cm^3$, einem Schmelzindex MFI 190/5 von 0,05 bis 0,2 g/10 min, ein Zahlenverhältnis der Schmelzindices

$$\frac{\text{MFI } 190/15}{\text{MFI } 190/5} \text{ größer als } 8,$$

und eine Scherviskosität bei 200° C bei einer Schubspannung von$10^5$ N/$m^2$ im Bereich von $6 \cdot 10^3$ bis $1 \cdot 10^5$ Pa · s und bei einer Schubspannung von $10^2$ N/$m^2$ im Bereich von $4 \cdot 10^5$ bis $4 \cdot 10^6$ Pa · s aufweisen und nach dem Ziegler-Verfahren gemäß Anspruch 2 hergestellt worden sind.

2. Verfahren zur Herstellung der Äthylencopolymeren gemäß Anspruch 1, durch zweistufige Copolymerisation von Äthylen mit einem 1-Olefin der Formel $R-CH=CH_2$, worin R einen Alkylrest mit 1 bis 6 Kohlenstoffatomen bedeutet, nach dem Ziegler-Verfahren in Suspension oder in der Gasphase, bei einer Temperatur von 20 bis 150° C, bei einem Druck von 0,5 bis 50 bar, in Gegenwart eines Mischkatalysators, welcher aus einer titanhaltigen Verbindung und einer aluminiumorganischen Verbindung besteht, unter Regelung des Molekulargewichts mittels Wasserstoff, dadurch gekennzeichnet, daß man die Polymerisation 4 bis 8 Stunden bei einer Temperatur von 25 bis 90° C derart durchführt, daß in der ersten Stufe in Gegenwart von 0 bis 20 Vol.-% Wasserstoff in der Gasphase 45 bis 70 Gew.-% eines hochmolekularen Copolymers mit 0,5 bis 5,5 Gew.-% an Comonomer und einem RSV-Wert von 5 bis 15 dl/g gebildet werden und in der zweiten Stufe bei einem Wasserstoffgehalt von 45 bis 80 Vol.-% im Gasraum 30 bis 55 Gew.-% eines niedermolekularen Copolymers mit einem RSV-Wert von 0,5 bis 3 dl/g entstehen.

3. Verwendung der Äthylencopolymeren gemäß Anspruch 1 zur Herstellung von Folien.

4. Blasfolien aus den Äthylencopolymeren gemäß Anspruch 1, dadurch gekennzeichnet, daß sie eine Stärke von 0,05 bis 0,25 mm aufweisen und daß in Längs- und Querrichtung ihre Reißfestigkeit größer als 25 N/$mm^2$, ihre Reißdehnung größer als 600%, ihre Einreißfestigkeit größer als 150 N/mm, ihre Weiterreißfestigkeit größer als 100 N/mm und ihre Schlagzähigkeit größer als 2500 mJ/$mm^2$ ist.

**Claims**

1. Ethylene copolymers containing from 94.5 to 99.5 weight % of ethylene and from 0.5 to 5.5 weight % of an 1-olefin of the formula $R-CH=CH_2$, in which R is an alkyl radical having from 1 to 6 carbon atoms,which have a density of from 0.935 to 0.945 g/$cm^3$, a melt index MFI 190/5 of from 0.05 to 0.2 g/min, a melt index ratio

$$\frac{\text{MFI } 190/15}{\text{MFI } 190/5} \text{ greater than } 8,$$

and a shear viscosity at 200° C and a shear stress of $10^5$ N/$m^2$ in the range of from $6 \cdot 10^3$ to $1 \cdot 10^5$ Pa · s, and at a shear stress of $10^2$ N/$m^2$ in the range of from $4 \cdot 10^5$ to $4 \cdot 10^6$ Pa · s and being prepared by the Ziegler-Process according to claim 2.

2. A process for the preparation of the ethylene copolymers of claim 1 by a two-step copolymerization of ethylene with a 1-olefin of the formula $R-CH=CH_2$, in which R is an alkyl radical having from 1 to 6 carbon atoms by the Ziegler-process, in suspension or in gaseous phase, at a temperature of from 20 to 150° C, under a pressure of from 0.5 to 50 bars, in the presence of a mixed catalyst consisting of a titaniumcontaining compound and an organoaluminium compound, with adjustment of the molecular weight by means of hydrogen, which comprises carrying out the polymerization during 4 to 8 hours at a temperature of from 25 to 90° C in such a way that in the first step in the presence of from 0 to 20% by volume hydrogen in the gaseous phase from 45 to 70% by weight of a high molecular weight copolymer having a comonomer content of from 0.5 to 5.5% by weight and a RSV value of from 5 to 15 dl/g, and in the second step at a hydrogen content in the gaseous phase of from 45 to 80% by volume from 30 to 55% by weight of a low molecular weight copolymer having a RSV value of from 0.5 to 3 dl/g are obtained.

3. Use of the ethylene copolymers of claim 1 for the manufacture of films.

4. Blown films of the ethylene copolymers of claim 1, having a thickness of from 0.05 to 0.25 mm, a tear strenght in longitudinal and transversal direction above 25 $N/mm^2$, an elongation at break above 600%, a tear initiation resistance above 150 N/mm, a tear propagation resistance above 100 N/mm, and an impact strength above 2500 $mJ/mm^2$.

**Revendications**

1. Copolymères de l'ethylène, caractérisés en ce qu'ils contiennent de 94,5 à 99,5% en poids d'éthylène et de 0,5 à 5,5% en poids d'une $\alpha$-oléfine $R-CH=CH_2$ dans laquelle R désigne un radical alkyle contenant de 1 à 6 atomes de carbone et en ce qu'ils ont une masse volumique de 0,935 à 0,945 $g/cm^3$, un indice de fusion MFI 190/5 de 0,05 à 0,2 g/10 minutes, un rapport d'indice de fusion:

$$\frac{\text{MFI 190/15}}{\text{MFI 190/5}}$$

supérieur à 8, et une viscosité de cisaillement à 200° C qui, pour une contrainte de cisaillement de 10 N/m, est comprise entre $6 \cdot 10$ à $1 \cdot 10^5$ Pa · s et, pour une contrainte de cisaillement de 10 $N/m^2$, est comprise entre $4 \cdot 10$ et $4 \cdot 10^6$ Pa · s et sont préparée par le procédé de Ziegler selon la revendication 2.

2. Procédé de préparation de copolymères de l'éthylène selon la revendication 1, par copolymérisation en deux étapes de l'éthylene avec une $\alpha$-olefine $R-CH=CH_2$ dans laquelle R désigne un radical alkyle contenant de 1 à 6 atomes de carbone par le procédé de Ziegler en suspension ou en gazeuse, à une température de 20 à 150° C, sous une pression de 0,05 à 5 MPa, en présence d'un catalyseur mixte constitué d'un composé contenant du titane et d'un composé organoaluminique, avec réglage du poids moléculaire au moyen d'hydrogéne, procédé caractérisé en ce qu'on effectue la polymerisation pendant une durée de 4 à 8 heures, à une température de 25 à 90° C, de telle manière que, dans la premiére étape, en présence de 0 à 20% enmoles d'hydrogéne dans la phase gazeuse il se forme de 45 à 70% en poids d'un copolymère à haut poids moléculaire ayant une tenéur en comonomère de 0,5 à 5,5% en poids et une VSR de 5 à 15 dl/g, et que, dans la deuxième étape, avec une teneur en hydrogène de 45 à 80% en volume dans la phase gazeuse, il se forme de 30 à 55% en poids d'un copolymère à bas poids moléculaire ayant une VSR de 0,5 à 3 dl/g.

3. Application des copolymères de l'éthylène selon la revendication 1 à la fabrication de feuilles.

4. Feuilles soufflés en copolymères de l'éthylène selon la revendication 1, caractérisées en ce qu'elles ont une épaisseur de 0,05 à 0,25 mm et en ce qu'elles ont, dans la direction longitudinale et dans la direction transversale une résistance à la traction supérieure à 25 $N/mm^2$, un allongement à la rupture supérieur à 600%, une résistance à la déchirure supérieure à 150 N/mm, une résistance à la déchirure amorcée supérieure à 100 N/mm et une résilience supérieure à 2500 $mJ/mm^2$.